# FASCICULE DE BREVET EUROPEEN

(11) **EP 1 807 304 B1**
(45) Date de publication et mention de la délivrance du brevet: **19.03.2008**
(21) Numéro de dépôt: 05809326.1
(22) Date de dépôt: 18.10.2005
(51) Int. Cl.: B64C 13/16, B64C 25/42

(54) **PROCEDE ET DISPOSITIF POUR AMELIORER L'EFFICACITE DE FREINAGE D'UN AERONEF ROULANT SUR LE SOL**
VERFAHREN UND VORRICHTUNG ZUR VERSTÄRKUNG DER BREMSEFFIZIENZ EINES FLUGZEUGES IM VERLAUF VON DESSEN LANDUNG
METHOD AND DEVICE FOR ENHANCING THE BRAKING EFFICIENCY OF AN AIRCRAFT DURING THE GROUND RUN THEREOF

(30) Priorité: 02.11.2004 FR 0411634
(43) Date de publication de la demande: 18.07.2007
(73) Titulaire: AIRBUS France, 31060 Toulouse (FR)
(72) Inventeur: MATHIEU, Gérard, F-31820 Pibrac (FR)
(74) Mandataire: Bonnetat, Christian
(86) Numéro de dépôt international: PCT/FR2005/002574
(87) Numéro de publication internationale: WO 2006/048519

(56) Documents cités:
- EP-A- 0 809 165
- EP-A- 0 936 114
- GB-A- 754 405
- US-A- 4 580 744
- US-A- 4 646 242

## Description

La présente invention concerne un procédé et un dispositif pour améliorer l'efficacité de freinage d'un aéronef roulant sur le sol.

EP-A-0 936 114 decrit un procédé selon le préambule de la revendication 1.

On sait que les avions actuels, notamment les avions de transport civil, comportent un fuselage allongé supporté, au sol, par un train d'atterrissage principal, disposé en position intermédiaire dudit fuselage, et par un train avant orientable, généralement appelé roulette de nez. De plus, les roues du train principal sont munies de freins, alors que ledit train avant, qui sert au guidage latéral de l'avion au sol, comporte des roues non freinées.

Il résulte de ces dispositions que, lorsqu'un tel avion roulant sur le sol est freiné, la force de freinage exercée par les roues du train principal engendre un moment piqueur ayant tendance à décharger ledit train principal et à charger ledit train avant. Par suite, le train principal ne s'applique pas sur le sol avec une pression suffisante pour permettre une efficacité du freinage optimale à l'avion.

La présente invention a pour objet de remédier à cet inconvénient et à conférer à un tel avion roulant sur le sol une efficacité de freinage toujours optimale.

A cette fin, selon l'invention, le procédé pour améliorer l'efficacité de freinage d'un aéronef roulant sur le sol, ledit aéronef comportant un fuselage allongé et étant pourvu :
- d'un train principal disposé en position intermédiaire dudit fuselage et comprenant des roues munies de freins ;
- d'un train avant orientable, disposé à l'avant dudit fuselage et servant au guidage latéral dudit aéronef au sol, ledit train avant comportant des roues non freinées ; et
- des surfaces aérodynamiques commandables, disposées à l'arrière du fuselage et aptes à engendrer une force de déportance variable,
est remarquable en ce que :
- dans une phase préalable, on détermine une valeur de référence pour l'effort vertical appliqué par le sol sur ledit train avant, ladite valeur de référence étant apte à assurer une efficacité satisfaisante audit train avant pour le guidage latéral dudit aéronef lorsque celui-ci roule sur le sol ; puis
- pendant le freinage dudit aéronef roulant sur le sol :
   ■ on mesure l'effort vertical instantané appliqué réellement par le sol sur ledit train avant ; et
   ■ on commande lesdites surfaces aérodynamiques arrière pour qu'elles engendrent une valeur de déportance apte à maintenir ledit effort vertical instantané à une valeur au moins approximativement égale à ladite valeur de référence.

Ainsi, grâce à la présente invention, on crée un moment cabreur antagoniste dudit moment piqueur de freinage et on augmente l'efficacité du freinage de l'aéronef -et donc on réduit la longueur de piste nécessaire à l'arrêt de ce dernier- par contrôle de l'effort vertical sur le train avant, tout en gardant une possibilité de guidage latéral suffisant de l'aéronef par le train avant. On remarquera de plus que, par braquage desdites surfaces aérodynamiques arrière, on augmente la traînée de l'aéronef, ce qui est favorable au freinage.

Ladite valeur de référence pour l'effort vertical appliqué par le sol sur ledit train avant peut être déterminée par le calcul ou bien par mesure expérimentale directe sur ledit train avant. Elle est choisie pour permettre d'assurer un contrôle latéral suffisant de l'aéronef et pour conserver une marge d'autorité au manche.

Lorsque ledit aéronef comporte, comme surfaces aérodynamiques arrière commandables, à la fois un empennage horizontal réglable et des gouvernes de profondeur articulées audit empennage, la génération de ladite valeur de déportance peut être obtenue soit par action sur ledit empennage horizontal réglable, soit par action sur lesdites gouvernes de profondeur ou bien encore par actions simultanées sur ledit empennage horizontal réglable et sur lesdites gouvernes de profondeur.

Cependant, la mise en oeuvre du procédé conforme à la présente invention est particulièrement aisée lorsqu'on utilise les seules gouvernes de profondeur. En effet, il suffit alors de modifier, pendant la phase de roulement freiné de l'aéronef, la caractéristique de celui-ci donnant le braquage des gouvernes de profondeur en fonction de l'ordre de braquage commandé de façon que, lorsque celui-ci est nul, l'angle de braquage desdites gouvernes prenne une valeur à cabrer.

La présente invention concerne de plus un dispositif pour la mise en oeuvre du procédé décrit ci-dessus. Outre des moyens engendrant une caractéristique donnant l'angle de braquage des gouvernes de profondeur en fonction d'un ordre de braquage, ladite caractéristique ayant un point neutre, le dispositif selon l'invention peut comporter :
- des moyens pour la mesure en continu de l'effort vertical appliqué audit train avant orientable, lorsque ledit aéronef roule sur le sol en étant freiné ;
- des moyens de mémoire, dans lesquels est stockée ladite valeur de référence ;
- des moyens de comparaison recevant ladite mesure continue dudit effort vertical et ladite valeur de référence et en faisant la différence ;
- des moyens de calcul recevant ladite différence et une mesure de la vitesse de roulement dudit aéronef et délivrant, pour l'angle de braquage desdites gouvernes de profondeur, une valeur à cabrer non nulle lorsque l'ordre de braquage est nul, ladite valeur à cabrer non nulle décroissant avec la vitesse de l'aéronef ;
- des moyens de calcul qui, à partir de ladite valeur à cabrer non nulle, détermine une caractéristique modifiée donnant l'angle de braquage des gouvernes de profondeur en fonction de l'ordre de braquage ; et
- des moyens de commutation permettant d'appliquer auxdites gouvernes de profondeur soit ladite caractéristique usuelle, soit ladite caractéristique modifiée, en fonction du fait que les roues du train principal ne sont pas ou sont freinées.

Les figures du dessin annexé feront bien comprendre comment l'invention peut être réalisée. Sur ces figures, des références identiques désignent des éléments semblables.
La figure 1 montre, en perspective schématique du dessus, un aéronef civil gros porteur.
Les figures 2A, 2B et 2C illustrent le procédé de la présente invention.
La figure 3 montre une caractéristique usuelle d'avion indiquant la valeur de l'angle de braquage δq des gouvernes de profondeur dudit avion en fonction de l'ordre de braquage δm.
Les figures 4 et 5 montrent deux exemples de caractéristique δq, δm modifiée conformément à la présente invention.
La figure 6 est le schéma synoptique d'un exemple de réalisation d'un système mettant en oeuvre le procédé conforme à la présente invention.

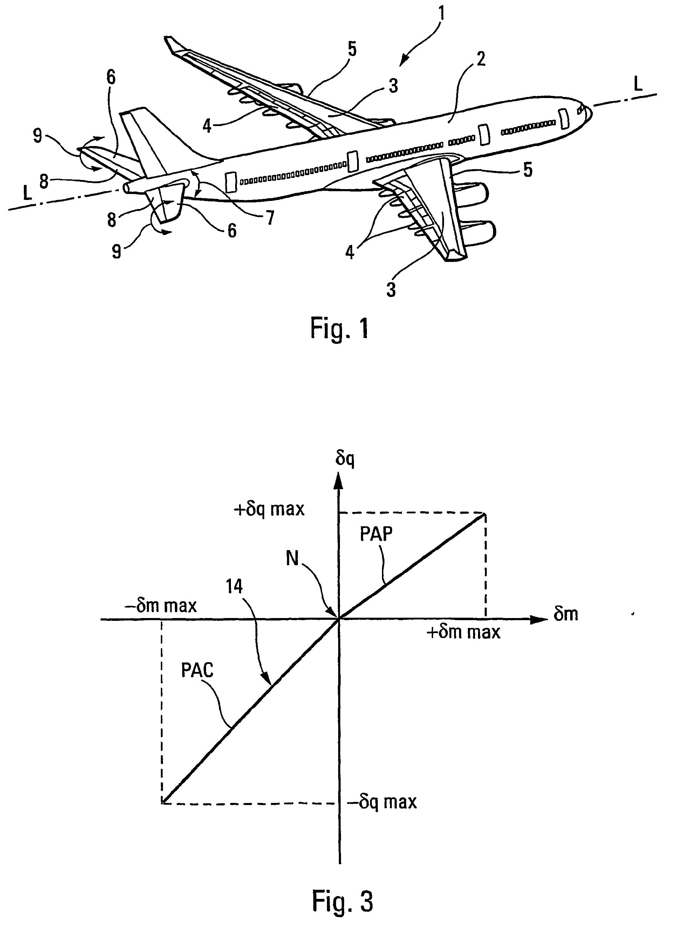

L'avion gros porteur 1, montré schématiquement en vol par la figure 1, comporte un fuselage 2, allongé le long d'un axe longitudinal L-L, et des ailes 3, pourvues de volets de bord de fuite 4 et de becs de bord d'attaque 5. Il comporte de plus un empennage horizontal 6 réglable en inclinaison, comme cela est illustré par la double flèche 7. Au bord arrière dudit empennage horizontal réglable 6, sont articulées des gouvernes de profondeur 8 pouvant tourner par rapport audit empennage horizontal 6, comme cela est illustré par les doubles flèches 9.

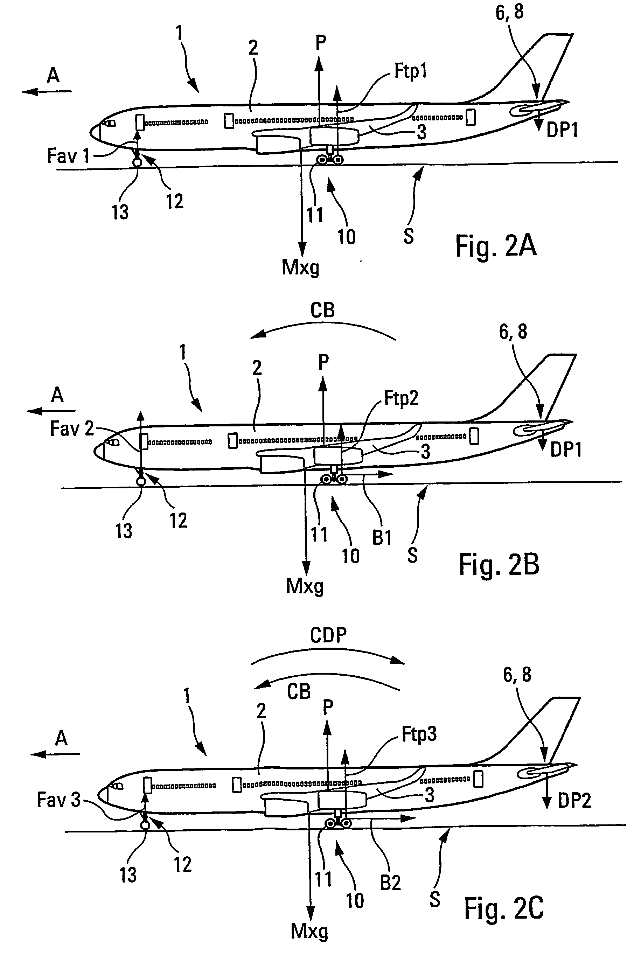

Par ailleurs, comme cela est illustré sur les figures 2A, 2B et 2C, l'avion 1 comporte un train d'atterrissage principal 10, disposé en position intermédiaire par rapport au fuselage 2 et pourvu de roues 1 munies -de façon connue et non représentée- de freins, et un train avant orientable 12 (généralement appelé roulette de nez), disposé à l'avant du fuselage 2 et servant au guidage dudit avion 1, lorsque celui-ci roule sur le sol. Ledit train avant 12 comporte des roues 13 non freinées.

Sur les figures 2A, 2B et 2C, on a représenté l'avion 1 dans trois situations différentes, alors qu'il se déplace sur le sol S dans la direction A avec une vitesse V, en appui sur ses trains 10 et 12, dont les roues 11 et 13 roulent sur ledit sol S. Dans chacune de ces situations, les ailes 3 et les volets et becs associés 4, 5 engendrent une portance égale P, alors que l'empennage horizontal 6 et/ou les gouvernes de profondeur 8 engendrent une déportance DP de valeur DP1 ou DP2. Dans les trois situations, l'avion 1 est soumis à l'action de son poids Mxg, expression dans laquelle M représente la masse dudit avion et g l'accélération de la pesanteur.

Dans la situation représentée sur la figure 2A, on a supposé que l'avion 1, subissant l'action de la portance P, du poids Mxg et d'une faible déportance DP1 (due à un calage usuel de l'empennage horizontal 6 avec les gouvernes de profondeur 8 en prolongement aérodynamique avec ledit empennage), roule librement sur le sol S, les roues 11 n'étant pas freinées. Il en résulte alors que les trains 10 et 12 sont respectivement soumis à des efforts verticaux Ftp et Fav de valeurs respectives Ftp1 et Fav1, l'effort Fav1 appliqué au train avant 12 étant approprié à la fonction de guidage au sol de l'avion 1 devant être exercée par ledit train avant 12. Bien entendu, les valeurs de Fav1 et de Ftp1 dépendent de la déportance DP1, du poids Mxg, de la position longitudinale du centre de gravité de l'avion 1, de la portance P (c'est-à-dire de la vitesse V et de la configuration des volets 4 et des becs 5) et du moment aérodynamique longitudinal.

Sur la figure 2B, on a supposé que, à partir de la situation de la figure 2A, on actionne les freins des roues 11 du train principal 10 pour produire un effort de freinage B afin de permettre audit avion de s'arrêter, soit lors d'un atterrissage, soit lors de l'interruption d'un décollage. Cet effort de freinage engendre un couple piqueur CB, chargeant le train avant 12 et déchargeant le train principal 10, de sorte que l'effort vertical Ftp prend une valeur Ftp2 inférieure à Ftp1, alors que l'effort vertical Fav prend une valeur Fav2 supérieure à Fav1. Puisque le train principal 10 est déchargé, ses roues 11 ne sont pas appliquées de façon optimale sur le sol S et l'effort de freinage B est limité supérieurement à une valeur B1, non optimale.

Pour permettre d'accroître l'effort de freinage au-delà de la valeur B1, le procédé conforme à la présente invention (voir la figure 2C) fait intervenir l'empennage horizontal réglable 6 et/ou les gouvernes de profondeur 8 pour augmenter, au moins pendant le freinage des roues 11, la déportance DP à une valeur DP2, supérieure à DP1. Il en résulte que cette augmentation de déportance crée un couple cabreur CDP qui s'oppose à l'action du couple de freinage CB et qui, lors d'un freinage des roues 11 du train principal 10, décharge le train avant 12 et charge le train principal 10, L'effort vertical Fav sur le train avant 12 peut alors prendre une valeur Fav3 inférieure à Fav2, alors que l'effort vertical Ftp sur le train principal 10 peut prendre une valeur Ftp3 supérieure à Ftp2.

Ainsi, en communiquant à la déportance DP une valeur DP2 supérieure à la valeur usuelle DP1 utilisée dans les situations des figures 2A et 2B, on augmente l'effort Ftp au-delà de la valeur Ftp2, de sorte que les roues 11 sont correctement appliquées sur le sol S et que l'effort de freinage peut prendre une valeur B2, supérieure à B 1, ce qui rend le freinage plus efficace. De plus, la valeur DP2 est choisie de façon que la valeur Fav3 prise par l'effort vertical Fav sur le train avant 12 permette audit train avant 12, tout comme Fav1, de servir au guidage de l'avion 1 sur le sol.

Le procédé conforme à la présente invention consiste donc à asservir, à la valeur Fav3 servant de référence, l'effort vertical Fav appliqué par le sol sur le train avant 12, par commande de la déportance DP.

Comme mentionné ci-dessus, l'augmentation de la déportance DP de la valeur DP1 à la valeur DP2 peut être obtenue soit par action de l'empennage horizontal réglable 6, soit par action des gouvernes de profondeur 8, ou bien encore par action combinée de l'empennage horizontal réglable 6 et des gouvernes de profondeur 8. Toutefois, dans une forme de réalisation particulièrement aisée à mettre en oeuvre, il est avantageux de ne faire intervenir que les gouvernes de profondeur 8.

On sait en effet que, de façon connue, comme cela est illustré par la courbe 14 de la figure 3, la caractéristique de l'avion 1 donnant, dans un système d'axes rectangulaires, l'angle de braquage δq des gouvernes de profondeur 8 en fonction de l'ordre de braquage δm au manche comporte une partie à piquer PAP, généralement linéaire, et une partie à cabrer PAC, généralement linéaire également, lesdites parties à piquer et à cabrer étant raccordées l'une à l'autre en un point neutre N. Ainsi, pour une variation de l'ordre de braquage 8m à piquer entre 0 et une valeur maximale +δmmax (et inversement entre + δmmax et 0), le braquage à piquer des gouvernes 8 varie entre 0 et une valeur maximale +δqmax (et inversement entre +δqmax et 0). De même, pour une variation de l'ordre de braquage δm à cabrer entre 0 et une valeur maximale -δmmax (et inversement entre -δmmax et 0), le braquage à cabrer des gouvernes 8 varie entre 0 et une valeur maximale -δqmax (et inversement entre -δqmax et 0). On sait de plus que, lorsque l'avion 1 roule sur le sol S dans les situations usuelles connues représentées sur les figures 2A et 2B, l'ordre de braquage δm est nul (les gouvernes de profondeur 8 sont en prolongement aérodynamique de l'empennage horizontal 6), de sorte que l'angle de braquage δq est également nul : on se trouve donc alors au point neutre N de la caractéristique 14, avec l'éventuelle faible déportance de valeur DP1 due au calage usuel de l'empennage horizontal réglable 6.

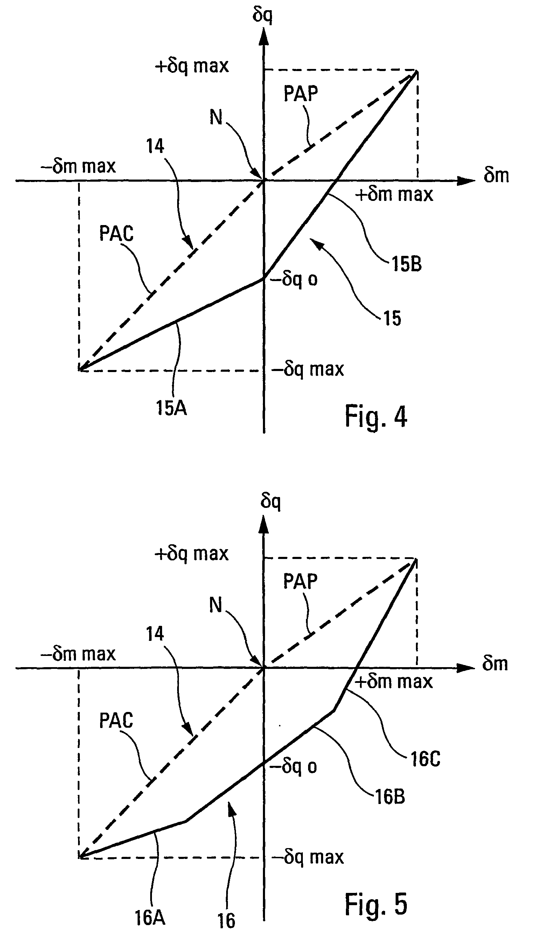

Selon une particularité importante de la présente invention, pour obtenir une valeur de déportance DP2 supérieure à la valeur DP1, alors que le manche est au neutre, on modifie la caractéristique 14 de la figure 3 pour que l'angle de braquage δq prenne une valeur à cabrer -δqo (susceptible d'engendrer la valeur de déportance DP2) lorsque l'ordre de braquage δm est nul (voir les figures 4 et 5).

Dans l'exemple de réalisation illustré par la figure 4, la caractéristique 14 est modifiée en une caractéristique 15 comportant une partie 1 5A, par exemple rectiligne, joignant le point δm = 0, δq = -δqo au point δm = -δm max, δq = -δq max, et une partie 15B, par exemple rectiligne, joignant le point δm = 0, δq = -δqo au point δm = + δm max, δq = + δq max.

En variante, dans l'exemple de modification de caractéristique montré par la figure 5, la caractéristique 14 est modifiée en une caractéristique 16 comportant une partie intermédiaire 16B, par exemple rectiligne, qui passe par le point δm = 0, δq = -δqo et dont les extrémités sont reliées aux points δm = -δm max, δq = -δq max et δm = +δm max, δq= +δq max, respectivement par des parties d'extrémité 16A et 16C, par exemple rectilignes.

On comprendra aisément que les caractéristiques 15 et 16 des figures 4 et 5 ne sont que des exemples parmi de nombreux autres.

Par ailleurs, puisque, au fur et à mesure de l'action de freinage B, la vitesse d'avance V de l'avion 1 sur le sol S décroît, il en résulte que la valeur de la portance P décroît, augmentant en conséquence la valeur des efforts Ftp et Fav et que, pour obtenir la même valeur Fav3 de l'effort vertical Fav sur le train avant 12, la valeur DP2 de la déportance DP doit également décroître en conséquence. La valeur DP2 doit donc décroître avec la vitesse d'avance V de l'avion 1, de sorte qu'il en est de même de la valeur absolue |δqo| de l'angle de braquage -δqo engendrant la valeur de déportance DP2, lorsque l'ordre de braquage δm est nul.

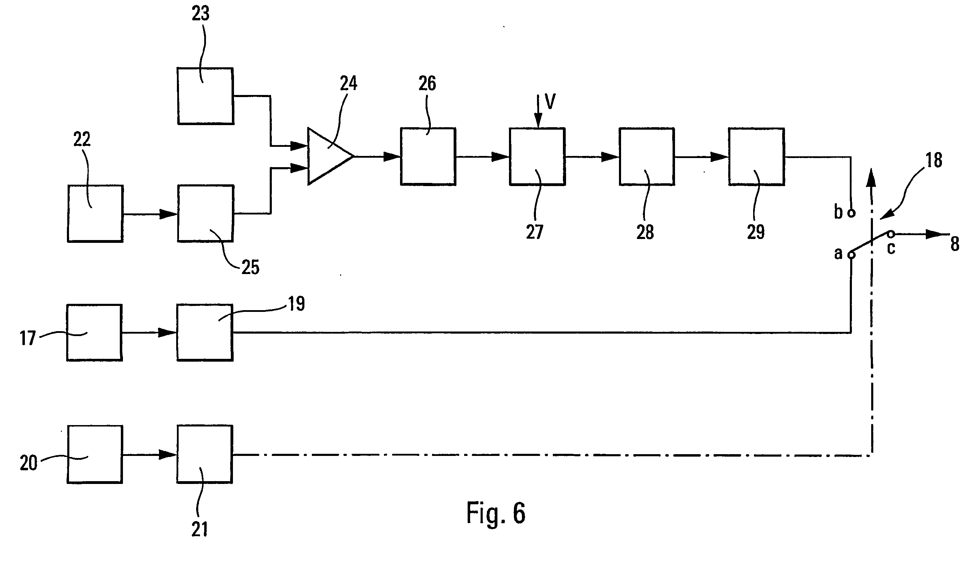

Sur la figure 6, on a représenté le schéma synoptique d'un système permettant de mettre en oeuvre le procédé conforme à la présente invention. Ce système comporte :
- un dispositif 17 connu, engendrant la caractéristique usuelle 14 (ou tout autre caractéristique analogue) présentant un point neutre N, pour lequel δm = 0 et δq = 0 ;
- un dispositif de commutation 18 comportant un contact de repos a auquel ledit dispositif 17 est relié par l'intermédiaire d'un limiteur de gradient (par exemple 20°/s), ledit dispositif de commutation 18 comportant un autre contact de travail b et un contact commun c relié à la chaîne de commande des gouvernes de profondeur 8 ;
- un dispositif 20 pour engendrer un ordre de freinage des roues 11 du train d'atterrissage principal 10, ledit dispositif 20 commandant le basculement du dispositif de commutation 18 de sa position de repos à sa position de travail, par l'intermédiaire d'un compteur 21 ;
- des moyens 22 de mesure de l'effort vertical réel Fav appliqué au train avant orientable 12 pendant le roulement de l'avion 1 sur le sol S, lesdits moyens étant par exemple du type capteur d'effort ou capteur de pression ;
- des moyens à mémoire 23, dans lesquels est stockée la valeur de référence Fav3 pour ledit effort vertical Fav ;
- des moyens de comparaison 24 recevant à leurs entrées, respectivement la valeur de référence Fav3 provenant des moyens à mémoire 23 et la mesure de l'effort vertical Fav provenant des moyens de mesure 22 par l'intermédiaire d'un filtre 25 ;
- un multiplicateur 26, permettant de multiplier le signal de différence, issu des moyens de comparaison 24, par un coefficient K, constant ou fonction de la vitesse V, représentatif de l'efficacité des gouvernes de profondeur 8 sur l'effort vertical Fav appliqué au train avant 12 ;
- un calculateur 27, recevant le signal issu du multiplicateur 26 et un signal représentatif de la vitesse instantanée de l'avion 1 et engendrant la valeur absolue |δqo|, décroissant avec la vitesse V, apte à assurer à chaque instant la déportance DP2 nécessaire pour obtenir la valeur d'effort désirée sur le train avant 12 ;
- un limiteur de gradient 28 (par exemple 5°/s) recevant ladite valeur absolue |δqo| ; et
- des moyens de calcul 29 qui, à partir de ladite valeur absolue |δqo| reçue du limiteur de gradient 28, détermine la caractéristique 15 ou 16 (ou toute autre caractéristique analogue) et la transmet au contact de travail b du dispositif de commutation 18.

Ainsi, lorsque l'avion 1 roule sur le sol S sans freiner, c'est la caractéristique 14 (ou toute caractéristique analogue avec point neutre N) qui est disponible pour commander les gouvernes de profondeur 8, à travers la chaîne 17, 19, a et c.

En revanche, lorsqu'un ordre de freinage engendré par le dispositif 20 est appliqué sur les roues 1 du train principal 10 pendant un temps prédéterminé par le compteur 21, ce dernier fait basculer le dispositif de commutation 18, de façon que le contact commun c soit alors relié au contact b. Dans ce cas, c'est la caractéristique 15 (ou la caractéristique 16 -ou tout autre caractéristique avec un point δm = 0,δq = -δqo) qui apparaît sur le contact commun c pour commander les gouvernes de profondeur 8.

Lorsque l'ordre de freinage cesse, le dispositif de commutation 18 rebascule de façon à relier de nouveau les contacts a et c et la caractéristique 14 est de nouveau disponible sur le contact commun c. Le limiteur de gradient 19 permet d'éliminer le moment à cabrer supplémentaire lorsque le moment de freinage CB disparaît.

Le système pour améliorer l'efficacité de freinage d'un aéronef, conforme à la présente invention, n'est pas limité au mode de réalisation montré schématiquement par la figure 6 et donné à titre d'exemple pour bien faire comprendre l'invention. Par exemple, le système de la figure 6 pourrait être modifié pour que le dispositif 17, engendrant la caractéristique 14, et le calculateur 27, engendrant les caractéristiques 15 ou 16, aient des parties communes.

## Revendications

1. Procédé pour améliorer l'efficacité de freinage d'un aéronef (1) roulant sur le sol (S), ledit aéronef (1) comportant un fuselage (2) allongé et étant pourvu :
- d'un train principal (10), disposé en position intermédiaire dudit fuselage (2) et comprenant des roues (11) munies de freins ;
- d'un train avant orientable (12), disposé à l'avant dudit fuselage (2) et servant au guidage latéral dudit aéronef (1) au sol, ledit train avant (12) comportant des roues (13) non freinées ; et
- des surfaces aérodynamiques commandables (6, 8), disposées à l'arrière du fuselage (2) et aptes à engendrer une force de déportance variable (DP),
**caractérisé en ce que** :
- dans une phase préalable, on détermine une valeur de référence (Fav3) pour l'effort vertical (Fav) appliqué par le sol (S) sur ledit train avant (12), ladite valeur de référence étant apte à assurer une efficacité satisfaisante audit train avant (12) pour le guidage latéral dudit aéronef (1) lorsque celui-ci roule sur le sol (S) ; puis
- pendant le freinage dudit aéronef (1) roulant sur le sol (S) :
■ on mesure' l'effort vertical instantané (Fav) appliqué réellement par le sol (S) sur ledit train avant (12) ; et
■ on commande lesdites surfaces aérodynamiques arrière (6, 8) pour qu'elles engendrent une valeur de déportance (DP2) apte à maintenir ledit effort vertical instantané (Fav) à une valeur au moins approximativement égale à ladite valeur de référence (Fav3).

2. Procédé selon la revendication 1,
**caractérisé en ce que** ladite valeur de déportance (DP2) décroît avec la vitesse dudit aéronef (1).

3. Procédé selon l'une des revendications 1 ou 2, appliqué à un aéronef (1) comportant un empennage horizontal réglable (6) et des gouvernes de profondeur (8) articulées audit empennage horizontal réglable (6),
**caractérisé en ce que** ladite valeur de déportance (DP2) est obtenue au moins en partie par commande dudit empennage horizontal réglable (6).

4. Procédé selon l'une des revendications 1 à 3, appliqué à un aéronef (1) dont les surfaces aérodynamiques arrière comportent des gouvernes de profondeur (8),
**caractérisé en ce que** ladite valeur de déportance (DP2) est obtenue au moins en partie par commande desdites gouvernes de profondeur (8).

5. Procédé selon la revendication 4,
**caractérisé en ce que** ladite valeur de déportance (DP2) est obtenue par commande des seules gouvernes de profondeur (8) et **en ce qu'**on modifie la caractéristique donnant l'angle de braquage (δq) desdites gouvernes de profondeur (8) en fonction de l'ordre de braquage (δm), de façon que, lorsque ledit ordre de braquage (δm) est nul, l'angle de braquage (δq) prenne une valeur à cabrer (-δqo).

6. Procédé selon la revendication 5,
**caractérisé en ce que** la valeur absolue |δqo| de ladite valeur à cabrer (-δqo) décroît avec la vitesse dudit aéronef (1).

7. Dispositif pour la mise en oeuvre du procédé selon la revendication 6, pourvu de moyens (17, 19) engendrant une caractéristique (14) donnant l'angle de braquage (δq) des gouvernes de profondeur (8) en fonction d'un ordre de braquage (δm), ladite caractéristique (14) ayant un point neutre (N) (pour lequel δq = 0 et δm = 0),
**caractérisé en ce qu'**il comporte :
- des moyens (22) pour la mesure en continu de l'effort vertical (Fav) appliqué audit train avant orientable (12), lorsque ledit aéronef (1) roule sur le sol en étant freiné ;
- des moyens de mémoire (23), dans lesquels est stockée ladite valeur de référence (Fav3) ;
- des moyens de comparaison (24) recevant ladite mesure continue dudit effort vertical (Fav) et ladite valeur de référence (Fav3) et en faisant la différence ;
- des moyens de calcul (27) recevant ladite différence et une mesure de la vitesse de roulement (V) dudit aéronef et délivrant, pour l'angle de braquage (δq) desdites gouvernes de profondeur (8), une valeur à cabrer (-δqo) non nulle lorsque l'ordre de braquage (δm) est nul, ladite valeur à cabrer non nulle décroissant avec la vitesse (V) de l'aéronef ;
- des moyens de calcul (29) qui, à partir de ladite valeur à cabrer non nulle, détermine une caractéristique modifiée (15, 16) donnant l'angle de braquage (δq) des gouvernes de profondeur (8) en fonction de l'ordre de braquage (δm) ; et
- des moyens de commutation (18) permettant d'appliquer auxdites gouvernes de profondeur (8) soit ladite caractéristique usuelle (14), soit ladite caractéristique modifiée (15, 16), en fonction du fait que les roues (11) du train principal (10) ne sont pas ou sont freinées.

## Claims

1. A method for enhancing the braking efficiency of an aircraft (1) taxiing on the ground (S), said aircraft (1) comprising an elongated fuselage (2) and being provided:
- with a main landing gear (10), disposed in an intermediate position of said fuselage (2) and comprising wheels (11) provided with brakes;
- with a steerable front landing gear (12), disposed at the front of said fuselage (2) and being used to laterally guide said aircraft (1) on the ground, said front landing gear (12) comprising wheels (13) without brakes; and
- with controllable aerodynamic surfaces (6, 8) disposed at the rear of the fuselage (2) and capable of generating a variable negative lift force (DP),
**characterized in that**:
- in a preliminary phase, a reference value (Fav3) is determined for the vertical force (Fav) exerted by the ground (S) on said front landing gear (12), said reference value being capable of ensuring a satisfactory efficiency of said front landing gear (12) for the lateral guiding of said aircraft (1) when the latter is taxiing on the ground (S); then
- while said aircraft (1) taxiing on the ground (S) is braking:
• the instantaneous vertical force (Fav) actually exerted by the ground (S) on said front landing gear (12) is measured; and
• said rear aerodynamic surfaces (6, 8) are controlled so that they generate a negative lift value (DP2) capable of maintaining said instantaneous vertical force (Fav) at a value at least approximately equal to said reference value (Fav3).

2. The method as claimed in claim 1, **characterized in that** said negative lift value (DP2) decreases with the speed of said aircraft (1).

3. The method as claimed in one of claims 1 or 2, applied to an aircraft (1) comprising an adjustable horizontal stabilizer (6) and elevators (8) hinged on said adjustable horizontal stabilizer (6),
**characterized in that** said negative lift value (DP2) is obtained at least partly by controlling said adjustable horizontal stabilizer (6).

4. The method as claimed in one of claims 1 to 3, applied to an aircraft (1) with rear aerodynamic surfaces that include elevators (8),
**characterized in that** said negative lift value (DP2) is obtained at least partly by controlling said elevators (8).

5. The method as claimed in claim 4,
**characterized in that** said negative lift value (DP2) is obtained by controlling the elevators (8) alone and **in that** the characteristic giving the deflection angle (δq) of said elevators (8) is modified according to the deflection command (δm), such that, when said deflection command (δm) is zero, the deflection angle (δq) assumes a nose-up value (-δqo).

6. The method as claimed in claim 5,
**characterized in that** the absolute value |δqo| of said nose-up value (-δqo) decreases with the speed of said aircraft (1).

7. A device for implementing the method as claimed in claim 6, provided with means (17, 19) generating a characteristic (14) giving the deflection angle (δq) of the elevators (8) according to a deflection command (δm), said characteristic (14) having a neutral point (N) (for which δq = 0 and δm = 0),
**characterized in that** it comprises:
- means (22) for continuously measuring the vertical force (Fav) exerted on said steerable front landing gear (12), when said aircraft (1) is taxiing on the ground with the brakes being applied;
- memory means (23), in which is stored said reference value (Fav3);
- comparison means (24) receiving said continuous measurement of said vertical force (Fav) and said reference value (Fav3) and calculating the difference;
- computation means (27) receiving said difference and a measurement of the taxiing speed (V) of said aircraft and delivering, for the deflection angle (δq) of said elevators (8), a nose-up value (-δqo) that is non-zero when the deflection command (δm) is zero, said non-zero nose-up value decreasing with the speed (V) of the aircraft;
- computation means (29) which, from said non-zero nose-up value, determine a modified characteristic (15, 16) giving the deflection angle (δq) of the elevators (8) according to the deflection command (δm) ; and
- switching means (18) for applying to said elevators (8) either said usual characteristic (14), or said modified characteristic (15, 16), depending on whether the wheels (11) of the main landing gear (10) have the brakes applied or not.

## Patentansprüche

1. Verfahren zur Verbesserung der Bremseffizienz eines auf dem Boden (2) rollenden Flugzeugs (1); wobei das Flugzeug einen langgestreckten Rumpf (2) umfasst und ausgestattet ist mit:
- einem Hauptfahrwerk (10), das in einer Mittellage des Rumpfes (2) angeordnet ist und mit Bremsen versehene Räder (11) umfasst,
- einem lenkbaren, vor dem Rumpf (2) angeordneten Bugfahrwerk (12), das zur seitlichen Führung des Flugzeugs (1) am Boden dient, wobei das Bugfahrwerk (12) ungebremste Räder (13) umfasst und
- ansteuerbaren aerodynamischen Flächen (6, 8), die am Heck des Rumpfes (2) angeordnet sind und die geeignet sind, eine variable Abtriebskraft (DP) zu erzeugen
**dadurch gekennzeichnet, dass**:
- in einer Vorlaufphase ein Referenzwert (Fav3) für die von dem Boden (S) auf das Bugfahrwerk (12) aufgebrachte vertikale Belastung (Fav) bestimmt wird, wobei der Referenzwert geeignet ist, eine für die seitliche Führung des Flugzeugs (1) zufriedenstellende Effizienz des Bugfahrwerks (12) sicherzustellen, wenn das Flugzeug auf dem Boden (S) rollt und anschließend
- während des Bremsens des auf dem Boden (S) rollenden Flugzeugs (1)
• die von dem Boden (S) auf das Bugfahrwerk (12) tatsächlich aufgebrachte momentane vertikale Belastung (Fav) gemessen wird und
• die hinteren aerodynamischen Flächen (6, 8) so angesteuert werden, dass sie einen Abtriebswert (DP2) erzeugen, der geeignet ist, die momentane vertikale Belastung (Fav) auf einem Wert zu halten, der zumindest annähernd gleich dem Referenzwert (Fav3) ist.

2. Verfahren nach Anspruch 1,
**dadurch gekennzeichnet, dass** der Abtriebswert (DP2) mit der Geschwindigkeit des Flugzeugs (1) abnimmt

3. Verfahren nach einem der Ansprüche 1 oder 2, eingesetzt bei einem Flugzeug (1), das ein verstellbares Höhenleitwerk (6) und an diesem verstellbaren Höhenleitwerk (6) angelenkte Höhenruder (8) umfasst,
**dadurch gekennzeichnet, dass** der Abtriebswert (DP2) zumindest teilweise durch Steuerung des verstellbaren Höhenleitwerks (6) erreicht wird.

4. Verfahren nach einem der Ansprüche 1 bis 3, eingesetzt bei einem Flugzeug (1), dessen hintere aerodynamische Flächen Höhenruder (8) umfassen,
**dadurch gekennzeichnet, dass** der Abtriebswert (DP2) zumindest teilweise durch Steuerung der Höhenruder (8) erreicht wird.

5. Verfahren nach Anspruch 4,
**dadurch gekennzeichnet, dass** der Abtriebswert (DP2) durch die alleinige Steuerung der Höhenruder (8) erreicht wird und **dadurch**, dass die Kennlinie, die den Ausschlagwinkel (δq) der Höhenruder (8) in Abhängigkeit von dem Ausschlagbefehl (δm) angibt, so verändert wird, dass der Ausschlagwinkel (δq) einen Überziehungsschwellenwert (-δqo) annimmt, wenn der Ausschlagbefehl (δm) null ist.

6. Verfahren nach Anspruch 5,
**dadurch gekennzeichnet, dass** der Absolutwert |δqo| des Überziehungsschwellenwerts (-δqo) mit der Geschwindigkeit des Flugzeugs (1) abnimmt.

7. Vorrichtung zur Durchführung des Verfahrens nach Anspruch 6, ausgestattet mit Mitteln (17, 19), die eine Kennlinie (14) erzeugen, die den Ausschlagwinkel (δq) der Höhenruder (8) in Abhängigkeit von einem Ausschlagbefehl (δm) angibt, wobei die Kennlinie (14) einen Neutralpunkt (N) hat (bei dem δq = 0 und δm = 0 ist),
**dadurch gekennzeichnet, dass** sie umfasst:
- Mittel (22) zum kontinuierlichen Messen der auf das lenkbare Bugfahrwerk (12) aufgebrachten vertikalen Belastung (Fav) während das Flugzeug (1) gebremst auf dem Boden rollt;
- Speichermittel (23), in welchen der Referenzwert (Fav3) abgespeichert ist;
- Vergleichsmittel (24), welche die kontinuierliche Messung der vertikalen Belastung (Fav) und den Referenzwert (Fav3) empfangen und die Differenz aus diesen bilden;
- Berechnungsmittel (27), welche die Differenz und eine Messung der Rollgeschwindigkeit (V) des Flugzeugs empfangen und für den Ausschlagwinkel (δq) der Höhenruder (8) einen von Null verschiedenen Überziehungsschwellenwert (-δqo) liefern, wenn der Ausschlagbefehl (δm) null ist, wobei der von Null verschiedene Überziehungsschwellenwert mit der Geschwindigkeit (V) des Flugzeugs abnimmt;
- Berechnungsmittel (29), die aus dem von Null verschiedenen Überziehungsschwellenwert eine-geänderte Kennlinie (15, 16) bestimmen, welche den Ausschlagwinkel (δq) der Höhenruder (8) in Abhängigkeit von dem Ausschlagbefehl (δm) angibt; und
- Schaltmittel (18), die es ermöglichen, in Abhängigkeit davon, ob die Räder (11) des Hauptfahrwerks (10) gebremst oder ungebremst sind, entweder die übliche Kennlinie (14), oder die geänderte Kennlinie (15, 16) auf die Höhenruder (8) anzuwenden.
